(19) **Europäisches Patentamt**

**European Patent Office**

**Office européen des brevets**

(11) **EP 0 818 683 B1**

(12) **EUROPÄISCHE PATENTSCHRIFT**

(45) Veröffentlichungstag und Bekanntmachung des Hinweises auf die Patenterteilung:
**16.04.2003 Patentblatt 2003/16**

(51) Int Cl.⁷: **G01P 15/16**, G01M 15/00, B60G 17/015

(21) Anmeldenummer: **97117420.6**

(22) Anmeldetag: **18.12.1992**

(54) **Verfahren zur Erkennung von Schlechtwegstrecken**

Method for detecting bad road stretches

Procédé de détection de mauvais état des routes

(84) Benannte Vertragsstaaten:
**DE FR GB**

(43) Veröffentlichungstag der Anmeldung:
**14.01.1998 Patentblatt 1998/03**

(62) Dokumentnummer(n) der früheren Anmeldung(en) nach Art. 76 EPÜ:
**92121627.1 / 0 602 277**

(73) Patentinhaber: **SIEMENS AKTIENGESELLSCHAFT**
**80333 München (DE)**

(72) Erfinder:
• **Angermaier, Anton**
**84172 Thann (DE)**
• **Wier, Manfred, Dr.**
**93173 Wenzenbach (DE)**
• **Engl, Maximilian**
**86316 Friedberg (DE)**

(56) Entgegenhaltungen:
**US-A- 4 651 290**         **US-A- 5 056 360**
**US-A- 5 109 695**

**Beschreibung**

Die Erfindung betrifft ein Verfahren zur Erkennung von Schlechtwegstrecken durch eine Auswertung der Raddrehzahlen eines Fahrzeuges.

Die Erkennung von Schlechtwegstrecken ist notwendig bei Verfahren zur Erkennung von Verbrennungsaussetzern, die die Vibrationen des Verbrennungsmotors überwachen oder die die Laufunruhe der Brennkraftmaschine anhand der schwankenden Umdrehungsgeschwindigkeit der Kurbelwelle überprüfen. Diese dort beobachteten Vibrationen oder Schwankungen der Umdrehungsgeschwindigkeit rühren erwünschterweise her vom zu überwachenden Verbrennungsvorgang und unerwünschterweise von äußeren Einflüssen auf das Fahrzeug, wie sie z.B. beim Überfahren einer unebenen Wegstrecke durch die dadurch verursachten Erschütterungen des Fahrzeugs und durch Schwingungsanregungen der Kurbelwelle auftreten.

Aus der US 4,651,290 ist eine Anordnung in einem Kraftfahrzeug zur Ermittlung einer unebenen Fahrbahn bekannt. Dabei ist ein Drehzahlfühler vorhanden, der an der Achse eines mitlaufenden Rades angebracht ist und ein elektrisches Signal mit einer Frequenz erzeugt, die zu der Drehzahl des Rades proportional ist. Durch Analysieren der dadurch erhaltenen Radbeschleunigung/-verlangsamung bzw. des Verzögerungs-/Beschleunigungssignals wird ein Wirkungskriterium für die Fahrbahnzustände berechnet. Das Wirkungskriterium für den Fahrbahnzustand wird dann mit einer vorbestimmten Einstellung für unebene Fahrbahnen verglichen um zu ermitteln, ob die Fahrbahn in einem guten oder in einem schlechten Zustand ist. Beim Übergang von einer ebenen auf eine unebene oder unbefestigte Fahrbahn können dann Steuermaßnahmen eingeleitet werden. Als entsprechende Steuermaßnahmen sind dabei offenbart: Blockierschutzregelung, Fahrwerksabstimmung, Niveauregelung, Servolenkung und Dämpfungssteuerung (Stoßdämpfer). Es handelt sich dabei also um Steuermaßnahmen, mit denen der Fahrkomfort beeinflußt werden kann.

Aus der US 4,809,197 ist ebenfalls eine Anordnung zur Erkennung einer Schlechtwegstrecke bekannt, bei der Änderungen der Radgeschwindigkeiten ausgewertet werden. Wird ein vorgegebener Grenzwert überschritten, so wird auf eine Schlechtwegstrecke geschlossen.

Aus der DE 41 00 527 A1 ist ein Verfahren und eine Vorrichtung zum Bestimmen von Aussetzern in einer Brennkraftmaschine beschrieben. Das Bestimmen von Aussetzern in einem Fahrzeug wird dabei ab Eintritt vorgegebener Bedingungen solange eingestellt, bis die vorgegebenen Bedingungen nicht mehr erfüllt sind. Dabei wird unterschieden zwischen rein logischen Bedingungen, Fahrzustandsbedingungen und Betriebsbedingungen. Eine rein logische Bedingung ist insbesondere die, dass nach einem Aussetzer unter bestimmten weiteren Bedingungen für eine vorgegebene Anzahl von Zündtakten ein weiteres Bestimmen von Aussetzern grundsätzlich verboten ist. Als Beispiel dafür ist eine Fahrbedingung, bei der das Aussetzerbestimmen verboten ist, das Fahren über holprigen Untergrund angegeben. Betriebszustände, bei denen die Bestimmung eingestellt wird, sind z. B. schnelle Last- oder Drehzahlwechsel oder sehr hohe oder niedrige Drehzahlen.

Aufgabe der vorliegenden Erfindung ist es, ein Verfahren anzugeben, das es ermöglicht, mit ausreichender Sicherheit eine solche schlechte Wegstrecke zu erkennen und das sich ohne zu großen zusätzlichen Hardware- und Softwareaufwand verwirklichen läßt.

Gelöst wird diese Aufgabe durch eine Überwachung der Raddrehzahl eines oder mehrerer Räder eines Fahrzeuges. Es werden dabei die Schwankungen der Raddrehzahl ausgewertet.

Informationen über die Raddrehzahl sind häufig bei Fahrzeugen mit elektronischer Motorsteuerung, insbesondere beim Vorhandensein einer ABS-Anlage, sowieso verfügbar, so daß hier kein zusätzlicher Hardwareaufwand zur Erfassung der Raddrehzahl notwendig ist.

Beim erfindungsgemäßen Verfahren werden nun die Schwankungen der Raddrehzahl ausgewertet, das heißt die positiven und negativen Beschleunigungen des Rades.

Es liegt dem die Beobachtung zugrunde, daß die durch die Bodenunebenheiten verursachten Beschleunigungen des Rades um ein Vielfaches größer sind als die Beschleunigungen, die durch den normalen Motorbetrieb physikalisch möglich sind. Werden also solch große Beschleunigungen am Rad gemessen, kann auf das Vorliegen einer Schlechtwegstrecke geschlossen werden, und Verfahren zur Verbrennungsaussetzererkennung werden ausgeblendet.

Zur Erfassung der Raddrehzahl ist gebräuchlicherweise am betreffenden Rad ein mit Zähnen versehenes Geberrad angebracht, das von einem passenden Sensor abgetastet wird.

Es werden nun die Zeiten (Segmentzeiten) gemessen, die das Rad benötigt, um einen bestimmten Winkelbereich zu überstreichen, d.h. die Zeiten, in der jeweils eine vorgebbare Anzahl von Zähnen des Geberrades den abtastenden Senscr passiert hat.

Um die Beschleunigungen des Rades, beziehungsweise die Änderungen der Segmentzeiten zu erfassen, werden jeweils aufeinanderfolgende Segmentzeiten miteinander verglichen. Überschreitet die Differenz einen vorgebbaren Grenzwert, so wird auf eine Schlechtwegstrecke geschlossen.

Da einzelne Unebenheiten des Untergrundes sich nur gering auf die Kurbelwellenschwingungen auswirken, d.h. die oben angeführten Verfahren zur Verbrennungsaussetzererkennung nicht nennenswert gestört werden, sollen Einzelstörungen unterdrückt werden und nur Schlechtwegstrecken erkannt werden, die eine gewisse Ausdehnung haben.

Die Beträge der ermittelten Differenzen der Segmentzeiten werden daher vor dem Vergleich mit dem Grenzwert vorteilhafterweise einer Mittelung unterzogen, beispielsweise einer gleitenden Mittelung.

Da die Auswirkungen der Schlechtwegstrecke auf das Fahrzeug stark geschwindigkeitsabhängig sind, ist es vorteilhaft, oben beschriebenen Grenzwert nicht konstant zu lassen, sondern geschwindigkeitsabhängig einem Kennfeld zu entnehmen. Auch ist es möglich, die betrachtete Segmentgröße geschwindigkeitsabhängig zu verändern, d.h. bei höheren Geschwindigkeiten auch die Segmentgröße zu erhöhen. Dies vermindert außerdem die Belastung des auswertenden Rechners.

Für die genaue Ermittlung einer Schlechtwegstrecke ist es notwendig, zumindest ein linkes und ein rechtes Rad auszuwerten, um eine Schlechtwegstrecke auch dann zu erkennen, wenn sich z.B. die linken Räder noch auf der ebenen Fahrbahn befinden, das Fahrzeug sich aber mit den rechten Rädern schon auf dem unebenen Randstreifen befindet.

Durch diese doppelte Auswertung wird wieder eine hohe Rechnerbelastung verursacht. Um diese zu senken, ist es möglich, nur ein Rad auszuwerten oder in einem Zeitraster zwischen der Auswertung eines linken Rades und eines rechten Rades hin- und herzuschalten.

Es besteht außerdem die Möglichkeit ein angetriebenes oder ein nicht angetriebens Rad zur Auswertung heranzuziehen.

Das Verfahren wird im folgenden anhand der Zeichnungsfiguren noch näher beschrieben. Es zeigen:

Figur 1    eine schematische Darstellung des erfindungsgemäßen Verfahrens und

Figur 2    ein Beispiel des Verlaufs der gemessenen Segmentzeiten und einer daraus berechneten, die Beschleunigung repräsentierenden Größe für den Fall, daß das Fahrzeug von einer glatten Fahrbahn auf eine Schlechtwegstrecke einfährt

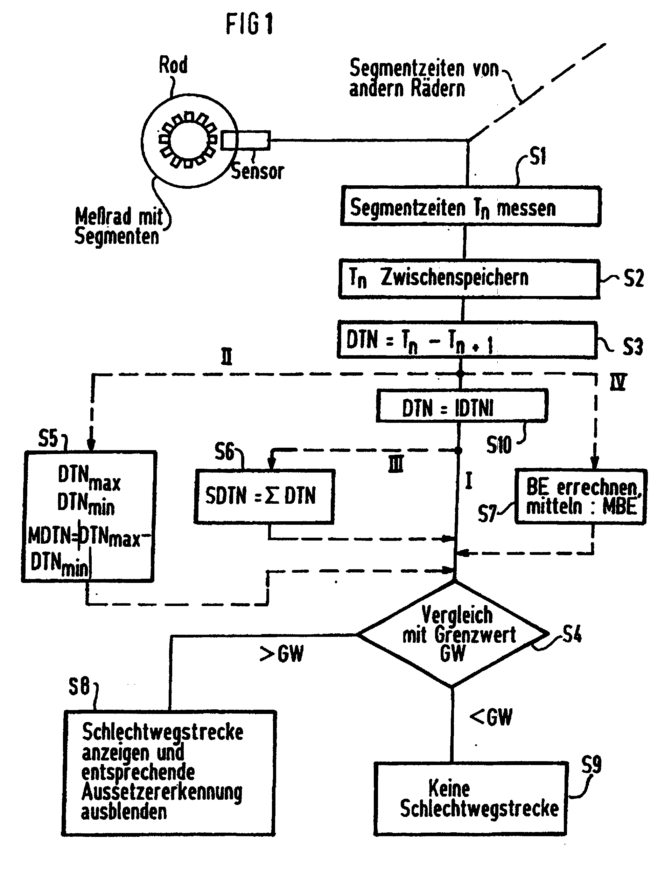

In Figur 1 ist schematisch in durchgezogenen Linien eine Ausführungsform des erfindungsgemäßen Verfahrens dargestellt (Variante I). Die 3 zusätzlichen Verfahrensvarianten (Varianten II,III und IV) bei der Weiterverarbeitung der berechneten Differenzen der Segmentzeiten, sind in gestrichelten Linien dargestellt.

Zunächst werden im Verfahrensschritt S1 die Segmentzeiten $T_n$ gemessen, also die Dauer derjenigen Zeiten, die das beobachtete Rad braucht, um bestimmte Winkelbereiche zu überstreichen. Beispielhaft ist die Messung angedeutet durch ein Geberrad mit Segmenten und ein diese Segmente abtastenden Sensor.

Im Verfahrensschritt S2 werden die gemessenen Segmentzeiten $T_n$ zwischengespeichert.

Aus aufeinanderfolgenden Segmentzeiten $T_n$, $T_{n+1}$ werden im Verfahrensschritt S3 jeweils die Differenzen DTN berechnet.

Beim in durchgezogenen Linien dargestellten Verfahrensablauf (Verfahrensvariante I) wird im Verfahrensschritt S10 der Betrag der Differenz gebildet und dieser im Verfahrensschritt S4 direkt mit einem Grenzwert GW verglichen.

In der Verfahrensvariante II wird dagegen im Verfahrensschritt S5 aus den während eines vorgebbaren Zeitraums ermittelten Differenzen der Maximalwert ($DTN_{max}$) und der Minimalwert ($DTN_{min}$) und aus diesen beiden Werten der BeMDTN = $|DTN_{max} - DTN_{min}|$. Dieser Wert MDTN wird dann im Verfahrensschritt S4 wieder mit einem Grenzwert GW verglichen.

In der Verfahrensvariante III werden, nachdem im Verfahrensschritt S10 die Beträge der ermittelten Differenzen gebildet wurden, diese im Verfahrensschritt S6 über eine vorgebbare Zahl von Segmenten aufsummiert. Diese Summe SDTN wird dann wieder im Verfahrensschritt S4 mit einem Grenzwert GW verglichen.

In der Verfahrensvariante IV wird aus den Segmentzeiten im Verfahrensschritt S7 eine die Beschleunigung repräsentierende Auslösegröße BE ermittelt nach der Formel:

$$BE = \left| \frac{T_n - T_{n+1}}{0{,}5 \cdot (T_n + T_{n+1})} \right|$$

, wobei

$T_n$     die Zeit ist, die das Rad zum Überstreichen des Winkelsegments n benötigt,

$T_{n+1}$     die Zeit ist, die das Rad zum Überstreichen des gleich großen Winkelsegments n+1 benötigt.

Diese Auslösegrößen werden direkt (BE), oder nachdem sie zusätzlich einer gleitenden Mittelung (MBE) beispielsweise nach der Formel:

$$MBE_n = MBE_{n-1} + MITKO * (BE_n - MBE_{n-1})$$

unterzogen wurden, im Verfahrensschritt S4 wieder mit einem Grenzwert GW verglichen.

Ist der nach einem der vier Verfahren ermittelte Wert betragsmäßig größer als der Grenzwert GW, so wird im Verfahrensschritt S8 eine Schlechtwegstrecke erkannt und die entsprechenden Verfahren zur Erkennung von Verbrennungsaussetzern ausgeblendet.

Ist aber der ermittelte Wert kleiner als der Grenzwert GW, so wird keine Schlechtwegstrecke erkannt - steuernde Maßnahmen unterbleiben (Verfahrensschritt S9).

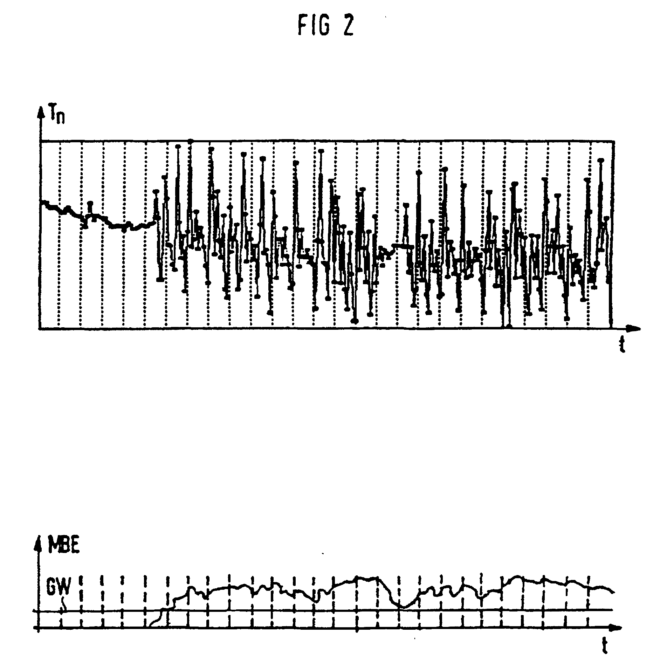

In Figur 2 sind in der oberen Hälfte, die am Rad zeitlich nacheinander gemessenen Segmentzeiten $T_n$ über der Zeit t aufgetragen. Das Fahrzeug befindet sich anfangs (linker Zeitbereich) auf einer glatten Fahrbahn. Die Schwankungen der Segmentzeiten $T_n$ sind relativ gering. Dann fährt das Fahrzeug auf eine schlechte Wegstrecke ein (rechter Zeitbereich). Die Segmentzeiten $T_n$ beginnen in ihrer Dauer stark zu schwanken.

In der unteren Hälfte der Figur 2 ist nun beispielhaft die, aus den gemessenen Segmentzeiten $T_n$ berechnete, die Beschleunigung des Rades repräsentierende Auslösegröße (BE) aufgetragen. Sie berechnet sich, wie oben schon beschrieben, nach der Formel:

$$BE = \left| \frac{T_n - T_{n+1}}{0,5 \bullet (T_n + T_{n+1})} \right|$$

, wobei

Sie wird anschließend einer gleitenden Mittelung unterzogen (MBE).

Im linken Bereich, d.h. solange sich das Fahrzeug auf einer glatten Fahrbahn befindet, ist diese Größe MBE nahezu Null.

Sobald das Fahrzeug aber auf die schlechte Wegstrecke einfährt (rechter Zeitbereich), steigt diese Größe MBE mit Schwankungen spürbar an. Diese Schwankungen überschreiten betragsmäßig dann einen hier als waagerechte Linie eingezeichneten Grenzwert GW, so daß zuverlässig diese schlechte Wegstrecke erkannt wird.

**Patentansprüche**

1. Verfahren zur Erkennung von Schlechtwegstrecken, auf denen zumindest ein Rad eines Kraftfahrzeuges abrollt,

   - durch Überwachen und Auswerten des Beschleunigungssignales des Rades,
   - Vergleichen des Signals mit einem vorgegebenen Grenzwert wobei
   - in Abhängigkeit vom Ergebnis dieses Vergleiches auf eine ebene Strecke oder auf eine Schlechtwegstrecke geschlossen wird,
   - eine die Beschleunigung des Rades repräsentierende Auslöse-große (BE) ermittelt wird,
   - die Auslösegröße (BE) abhängig von mindestens zwei, jeweils aufeinanderfolgenden Segmentzeiten ($T_n$,$T_{n+1}$), die ein Rad zum Durchlaufen zugeordneter Winkelsegmente benötigt, gewählt wird,
   - die Höhe des Grenzwertes (GW) derart festgelegt wird, daß er bei normalem Betrieb der Brennkraftmaschine des Kraftfahr-zeuges auf einer ebenen Strecke nicht erreicht werden kann, **dadurch gekennzeichnet, daß**
   - der Wert des Betrages der Auslösegröße (BE) gebildet wird,
   - der Grenzwert (GW) geschwindigkeitsabhängig festgelegt ist und
   - bei Überschreiten des Grenzwertes (GW) Verfahren zur Erkennung von Verbrennungsausetzern der Brennkraftmaschine ausgeblendet werden.

2. Verfahren nach Anspruch 1,
   **dadurch gekennzeichnet, daß**
   als Auslösegröße der Betrag der Differenz (DTN) von aufeinanderfolgenden Segmentzeiten dient.

3. Verfahren nach Anspruch 1,
   **dadurch gekennzeichnet, daß** die Auslösegröße ermittelt wird, indem die Beträge der Differenzen (DTN) aufeinanderfolgender Segmentzeiten gebildet über eine vorgebbare Anzahl von Segmenten aufsummiert werden (SDTN).

4. Verfahren nach Anspruch 1,
   **dadurch gekennzeichnet, daß**
   die Auslösegröße ermittelt wird,

   - indem die Differenzen (DTN) von aufeinanderfolgenden Segmentzeiten gebildet werden,
   - aus den während eines vorgebbaren Zeitraums ermittelten Differenzen der Maximalwert ($DTN_{max}$) und der Minimalwert ($DTN_{min}$) ermittelt wird und
   - aus diesen beiden Werten die Differenz (MDTN) gebildet wird.

5. Verfahren nach Anspruch 1,
   **dadurch gekennzeichnet, daß**
   die Auslösegröße (BE) ermittelt wird nach der Formel:

$$BE = \left| \frac{T_n - T_{n+1}}{0,5 * (T_n + T_{n+1})} \right|$$

, wobei

$T_n$    die Segmentzeit ist, die das Rad zum Überstreichen des Winkelsegments n benötigt,

$T_{n+1}$    die Segmentzeit ist, die das Rad zum Überstreichen des gleich großen Winkelsegments n+1 benötigt.

6. Verfahren nach Anspruch 5,
   **dadurch gekennzeichnet, daß**
   die Auslösegröße (BE) vor dem Vergleich mit dem Grenzwert (GW) einer gleitenden Mittelung unterzogen wird nach der Formel:

$$MBE_n = MBE_{n-1} + MITKO * (BE_n - MBE_{n-1})$$

7. Verfahren nach einem der Ansprüche 1 - 6
   **dadurch gekennzeichnet, daß** die Segmentzeiten abwechselnd an einem Rad der linken Fahrzeugseite und an einem Rad der rechten Fahrzeugseite gemessen werden.

8. Verfahren nach einem der Ansprüche 1 - 6, **dadurch gekennzeichnet, daß** es sich bei dem ausgewerteten Rad um ein angetriebenes Rad handelt.

**Claims**

1. Method for identifying poor stretches of road, over which at least one wheel of a vehicle moves,

   - by monitoring and analysing the acceleration signal from the wheel,
   - comparing the signal with a defined limit value, whereby,
   - conditional upon the result of this comparison a smooth stretch of road or a poor stretch of road is inferred,
   - a trigger variable (BE) representing the acceleration of the wheel is determined,
   - the trigger variable (BE) is selected conditional upon at least two consecutive segment times $(T_n, T_{n+1})$ which a wheel requires in order to describe assigned angular segments,
   - the level of the limit value (GW) is set such that during normal operation of the vehicle's internal combustion engine on a smooth stretch of road it cannot be reached, **characterised in that**
   - the value of the amount of the trigger variable (BE) is formed,
   - the limit value (GW) is set conditional upon velocity and
   - when the limit value (GW) is exceeded, methods for identifying combustion misfirings in the internal combustion engine are suppressed.

2. Method according to Claim 1, **characterised in that** the amount of the difference (DTN) in consecutive segment times serves as a trigger variable.

3. Method according to Claim 1, **characterised in that** the trigger variable is determined by summing (SDTN) the amounts of the differences (DTN) in consecutive segment times, formed over a definable number of segments.

4. Method according to Claim 1, **characterised in that** the trigger variable is determined,

   - by forming the differences (DTN) in consecutive segment times,
   - from the differences in the maximum value (DT- $N_{max}$) and the minimum value ($DTN_{min}$) deter- mined during a definable period of time and
   - the difference (MDTN) is formed from these two values.

5. Method according to Claim 1, **characterised in that** the trigger variable (BE) is determined using the for- mula:

$$BE = \left| \frac{T_n - T_{n+1}}{0.5^*(T_n + T_{n+1})} \right|$$

, where

$T_n$ is the segment time which the wheel requires to traverse the angular segment n,

$T_{n+1}$ is the segment time which the wheel requires to traverse the angular segment n+1 of equal size.

6. Method according to Claim 5, **characterised in that** the trigger variable (BE) is subject to moving averaging prior to the comparison with the limit value (GW) using the formula:

$$MBE_n = MBE_{n-1} + MITKO^*(BE_n - MBE_{n-1}).$$

7. Method according to one of Claims 1 to 6, **characterised in that** the segment times are measured alternately on a wheel on the left side of the vehicle and on a wheel on the right side of the vehicle.

8. Method according to one of Claims 1 to 6, **characterised in that** the wheel analysed is a driven wheel.

**Revendications**

1. Procédé pour reconnaître des mauvaises portions de route sur lesquelles roule au moins une roue d'un véhicule automobile,

   - par surveillance et interprétation du signal d'accélération de la roue,
   - par comparaison du signal à une valeur limite prédéfinie, dans lequel,
   - on décide, en fonction du résultat de cette comparaison, s'il s'agit d'une portion de route plane ou d'une mauvaise portion de route
   - on détermine une grandeur de déclenchement (BE) représentant l'accélération de la roue,
   - on choisit la grandeur de déclenchement (BE) en fonction d'au moins deux temps de seg- ments successifs $(T_n, T_{n+1})$, nécessaires pour qu'une roue parcoure des segments angulaires associés,
   - on définit la hauteur de la valeur limite (GW) de telle façon qu'elle ne puisse pas être atteinte lors du fonctionnement normal du moteur à combustion interne du véhicule automobile sur une portion de route plane,

**caractérisé en ce que**,

- on forme la valeur du montant de la grandeur de déclenchement (BE),
- la valeur limite (GW) est définie en fonction de la vitesse, et,
- en cas de dépassement de la valeur limite (GW), des procédés pour reconnaître les ratés de combustion du moteur à combustion interne sont mis en sommeil.

2. Procédé suivant la revendication 1, **caractérisé en ce que**, comme grandeur de déclenchement (BE), on utilise le montant de la différence (DTN) de temps successifs de segments.

3. Procédé suivant la revendication 1, **caractérisé en ce que** la grandeur de déclenchement est déterminée en faisant la somme (SDTN) des montants des différences (DTN) de temps de segments successifs, sur un nombre prédéfinissable de segments .

4. Procédé suivant la revendication 1, **caractérisé en ce que** la grandeur de déclenchement est déterminée

- en formant la différence (DTN) de temps de segments successifs,
- en déterminant, à partir des différences déterminées pendant une durée prédéfinissable, la valeur maximale ($DTN_{max}$) et la valeur minimale ($DTN_{min}$), et
- en formant, à partir de ces deux valeurs, la différence (MDTN).

5. Procédé suivant la revendication 1, **caractérisé en ce que** la grandeur de déclenchement (BE) est déterminée d'après la formule :

$$BE = \left| \frac{T_n - T_{n+1}}{0,5^*(T_n + T_{n+1})} \right|$$

dans laquelle,

$T_n$ est le temps de segment qui est nécessaire pour la roue pour parcourir le segment angulaire n,

$T_{n+1}$ est le temps de segment qui est nécessaire pour la roue pour parcourir le segment angulaire n+1 de même taille.

6. Procédé suivant la revendication 5, **caractérisé en ce que** la grandeur de déclenchement (BE), avant la comparaison avec la valeur limite (GW), est obtenue par une moyenne glissante, d'après la formule:

$$MBE_n = MBE_{n-1} + MITKO^*(BE_n - MBE_{n-1})$$

7. Procédé suivant l'une des revendications 1 à 6, **caractérisé en ce que** les temps de segments sont mesurés alternativement sur une roue du côté gauche du véhicule automobile et sur une roue du côté droit du véhicule automobile.

8. Procédé suivant l'une des revendications 1 à 6, **caractérisé en ce qu'**il s'agit, pour la roue soumise à l'interprétation, d'une roue motrice.

EP 0 818 683 B1

## FIG 1

Rod

Segmentzeiten von andern Rädern

Meßrad mit Segmenten

Sensor

S1 — Segmentzeiten $T_n$ messen

$T_n$ Zwischenspeichern — S2

$DTN = T_n - T_{n+1}$ — S3

II

IV

DTN = IDTNI

S10

S5

$DTN_{max}$
$DTN_{min}$

$MDTN = DTN_{max} - DTN_{min}$

S6

III

SDTN = Σ DTN

I

S7

BE errechnen, mitteln : MBE

Vergleich mit Grenzwert GW — S4

> GW

< GW

S8 — Schlechtwegstrecke anzeigen und entsprechende Aussetzererkennung ausblenden

S9 — Keine Schlechtwegstrecke

7

FIG 2